# DEMANDE DE BREVET EUROPEEN

(11) **EP 2 878 997 A1**
(43) Date de publication de la demande: **03.06.2015**
(21) Numéro de dépôt: 13194652.7
(22) Date de dépôt: 27.11.2013
(51) Int. Cl.: G02F 1/137, G02F 1/1335

(54) **Dispositif d'affichage d'informations à cristal liquide dichroïque**

(71) Demandeur: The Swatch Group Research and Development Ltd., 2074 Marin (CH)
(72) Inventeur: Tortora, Pierpasquale, 2000 Neuchâtel (CH)
(74) Mandataire: Supper, Marc

(57) **Abrégé**

Dispositif d'affichage d'informations (22) comprenant une cellule d'affichage à cristal liquide dichroïque (24) de type transmissif disposée entre un film polariseur (26) placé du côté d'un observateur et un guide de lumière (28) dans lequel est injectée la lumière produite par une source de lumière (10), un film réflecteur (30) étant agencé sous le guide de lumière (28).

## Description

La présente invention concerne un dispositif d'affichage d'informations comprenant une cellule d'affichage à cristal liquide dichroïque.

Dans une cellule d'affichage à cristal liquide dichroïque, les molécules de cristal liquide sont liées chimiquement à des cristaux dichroïques. Lorsque les molécules de cristal liquide tournent sous l'effet de l'application d'un champ électrique, cela modifie l'orientation des cristaux dichroïques. En l'absence de champ électrique, les cristaux dichroïques sont orientés de sorte qu'ils absorbent l'une des deux directions de polarisation de la lumière, et transmettent l'autre composante orthogonale de la lumière. En présence d'un champ électrique, les cristaux dichroïques suivent les molécules de cristal liquide et s'orientent de telle manière qu'ils ne présentent plus d'effet dichroïque, de sorte que les deux directions de polarisation de la lumière sont transmises de manière semblable. Une cellule d'affichage à cristal liquide dichroïque permet de réaliser des dispositifs d'affichage d'informations ne nécessitant qu'un seul film polariseur.

Deux exemples de réalisation d'un dispositif d'affichage d'informations de l'art antérieur comprenant une cellule d'affichage à cristal liquide dichroïque sont illustrés sur les figures 1A à 1C, et 2A à 2C annexées à la présente demande de brevet. Dans ce qui suit, les deux directions orthogonales de polarisation de la lumière sont classiquement représentées pour l'une par un trait horizontal à double flèche désigné par la lettre A compris dans le plan de la figure, et pour l'autre par un trait vertical à double flèche désigné par la lettre B qui matérialise une direction perpendiculaire à la direction horizontale de polarisation de la lumière. Dans ce qui suit, on appellera horizontale la direction de polarisation A, et verticale la direction de polarisation B.

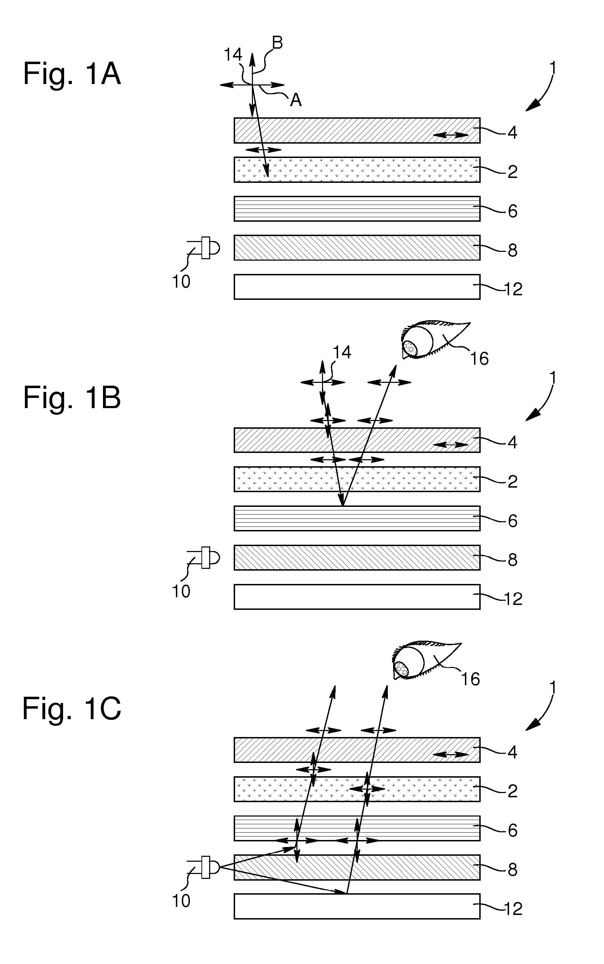

La figure 1 A est une vue en coupe d'un premier mode de réalisation d'un dispositif d'affichage d'informations de l'art antérieur. Désigné dans son ensemble par la référence numérique générale 1, le dispositif d'affichage d'informations comprend une cellule d'affichage 2 à cristal liquide dichroïque disposée entre un film polariseur 4 situé du côté d'un observateur et une couche transflective 6. On suppose que le film polariseur 4 polarise la lumière ambiante selon la direction horizontale de polarisation A comprise dans le plan de la figure. Un guide de lumière 8 dans lequel est injectée la lumière produite par une source de lumière 10 est disposé sous la couche transflective 6 et est muni sur une face arrière d'un film réfléchissant 12. On précise qu'une couche transflective est à la fois transmissive par rapport à la lumière qui émerge vers le haut du guide de lumière 8, et réflective en captant la lumière ambiante située devant le dispositif d'affichage 1.

A la figure 1A, la cellule d'affichage dichroïque 2 se trouve en condition diurne, en l'absence de champ électrique appliqué. Comme on le voit à l'examen de cette figure, la lumière naturelle 14, non polarisée, est polarisée horizontalement par le film polariseur 4, puis est absorbée par la cellule d'affichage dichroïque 2. Aucune information n'est donc affichée.

A la figure 1B, la cellule d'affichage dichroïque 2 se trouve en condition diurne et à l'état commuté, c'est-à-dire qu'un champ électrique est appliqué. Comme on le voit à l'examen de cette figure, la lumière naturelle 14, non polarisée, est polarisée horizontalement par le film polariseur 4, puis traverse la cellule d'affichage dichroïque 2 sans être modifiée, avant d'être réfléchie par la couche transflective 6 qui ne modifie pas non plus sa direction de polarisation. Au retour, la direction horizontale de polarisation de la lumière traverse à nouveau sans modification la cellule d'affichage dichroïque 2 ainsi que le film polariseur 4 et peut être perçue par un observateur 16. Dans l'état commuté de la cellule d'affichage dichroïque 2, il est donc possible d'afficher des informations perceptibles de jour.

On s'intéresse maintenant, en liaison avec la figure 1C, à l'utilisation du dispositif d'affichage d'informations 1 en conditions nocturnes, dans le cas où un champ électrique est appliqué à la cellule d'affichage dichroïque 2.

On comprendra qu'en condition diurne, on utilise la propriété réflective de la couche transflective 6 pour renvoyer la lumière ambiante en direction de l'observateur 16, tandis qu'en condition nocturne, on utilise, comme détaillé ci-dessous, la propriété transmissive de la couche transflective 6 pour permettre à la lumière provenant du guide de lumière 8 de passer.

A la figure 1C, la lumière extraite du guide de lumière 8 est non polarisée. Après être passée à travers la couche transflective 6, la lumière traverse la cellule d'affichage dichroïque 2 sans modification, puis est polarisée horizontalement lorsqu'elle traverse le film polariseur 4 et peut être perçue par l'observateur 16. Quant à la lumière qui s'extrait du guide de lumière 8 par le bas de celui-ci, elle est réfléchie par le film réfléchissant 12 et renvoyée en direction de la cellule d'affichage dichroïque 2 qu'elle traverse sans modification. Elle traverse ensuite le film polariseur 4 en étant polarisée horizontalement et peut être perçue par l'observateur 16.

On voit donc, au vu de ce qui précède, que le premier exemple de réalisation d'un dispositif d'affichage d'informations dichroïque décrit en liaison avec les figures 1A à 1C comprend, outre la cellule d'affichage dichroïque 2, un film polariseur 4, une couche transflective 6, un guide de lumière 8 et un film réfléchissant 12.

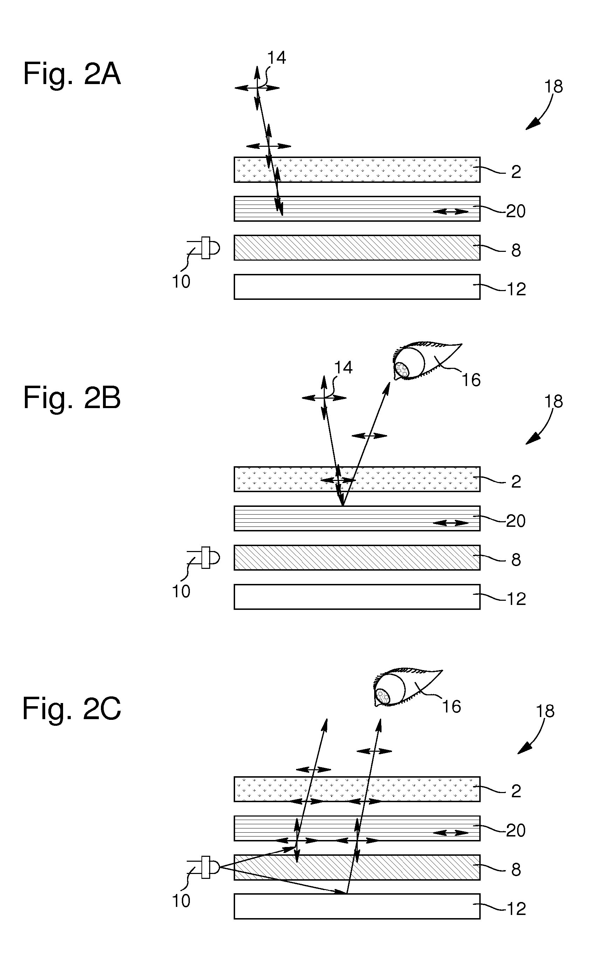

Dans ce qui suit, les éléments identiques à ceux décrits en liaison avec les figures 1A à 1C seront désignés par les mêmes références numériques. Un second mode de réalisation d'un dispositif d'affichage d'informations de l'art antérieur comprenant une cellule d'affichage à cristal liquide dichroïque est illustré sur les figures 2A à 2C. Désigné dans son ensemble par la référence numérique générale 18, ce dispositif d'affichage d'informations se distingue de celui discuté ci-dessus en ce que les fonctions transflective et de polarisation de la lumière naturelle sont réunies dans un même film. Plus précisément, le dispositif d'affichage d'informations 18 comprend la cellule d'affichage dichroïque 2 sous laquelle sont disposés successivement un film 20 polarisant et transflectif, le guide de lumière 8 et le film réfléchissant 12.

A la figure 2A, la cellule d'affichage dichroïque 2 se trouve en condition diurne, en l'absence de champ électrique appliqué. Comme on le voit à l'examen de cette figure, la lumière naturelle 14, non polarisée, est polarisée verticalement par la cellule d'affichage dichroïque 2 puis est absorbée par le film 20 polarisant et transflectif qui polarise la lumière ambiante selon la direction horizontale de polarisation A comprise dans le plan de la figure. Aucune information n'est donc affichée.

A la figure 2B, la cellule d'affichage dichroïque 2 se trouve en condition diurne et à l'état commuté, c'est-à-dire qu'un champ électrique est appliqué. Comme on le voit à l'examen de cette figure, la lumière naturelle 14, non polarisée, passe sans modification à travers la cellule d'affichage dichroïque 2, puis sa composante verticale est absorbée par le film 20 polarisant et transflectif tandis que sa composante horizontale est réfléchie et traverse à nouveau sans modification la cellule d'affichage dichroïque 2 pour être perçue par l'observateur 16. Dans l'état commuté de la cellule d'affichage dichroïque 2, il est donc possible d'afficher des informations perceptibles de jour en utilisant les propriétés polarisante et réflective du film 20.

On s'intéresse maintenant, en liaison avec la figure 2C, à l'utilisation du dispositif d'affichage d'informations 1 en condition nocturne, dans le cas où un champ électrique est appliqué à la cellule d'affichage dichroïque 2.

On comprendra qu'en condition diurne, on utilise la propriété réflective du film 20 polarisant et transflectif pour renvoyer la lumière ambiante en direction de l'observateur 16, tandis qu'en condition nocturne, on utilise, comme détaillé ci-dessous, la propriété transmissive du film 20 polarisant et transflectif pour permettre à la lumière provenant du guide de lumière 8 de passer.

A la figure 2C, la lumière extraite du guide de lumière 8 est non polarisée. Lors de son passage à travers le film 20 polarisant et transflectif, elle est polarisée horizontalement, puis traverse la cellule d'affichage dichroïque 2 sans modification et peut être perçue par l'observateur 16. Quant à la lumière qui s'extrait du guide de lumière 8 par le bas de celui-ci, elle est réfléchie par le film réfléchissant 12 et est renvoyée en direction du film 20 polarisant et transflectif où elle est polarisée horizontalement. Elle traverse ensuite la cellule d'affichage dichroïque 2 sans modification et peut être perçue par l'observateur 16.

Le mode de réalisation illustré aux figures 2A à 2C a, par rapport au mode de réalisation illustré aux figures 1A à 1C, l'avantage que les fonctions transflective et de polarisation de la lumière naturelle sont réunies dans un unique film 20, de sorte que l'épaisseur du dispositif d'affichage d'informations 18 résultant est réduite.

La présente invention a pour but de procurer un dispositif d'affichage d'informations comprenant une cellule d'affichage à cristal liquide dichroïque dont l'épaisseur est encore réduite davantage par rapport aux solutions connues de l'art antérieur.

A cet effet, la présente invention concerne un dispositif d'affichage d'informations comprenant une cellule d'affichage à cristal liquide dichroïque de type transmissif disposée entre un film polariseur placé du côté d'un observateur et un guide de lumière dans lequel est injectée la lumière produite par une source de lumière, un film réflecteur étant agencé sous le guide de lumière.

Grâce à ces caractéristiques, la présente invention procure un dispositif d'affichage d'informations de type dichroïque dans lequel on fait l'économie d'une couche transflective, ce qui permet de réduire l'épaisseur et le prix de revient d'un tel dispositif d'affichage d'informations. On s'est en effet aperçu qu'en mode jour tout comme en mode nuit, on peut se servir du film réflecteur disposé à l'arrière du guide de lumière pour capter la lumière ambiante ou bien renvoyer la lumière qui sort du guide de lumière.

Selon une variante de réalisation, la présente invention concerne un dispositif d'affichage d'informations comprenant une cellule d'affichage à cristal liquide dichroïque de type réflectif disposée entre un guide de lumière placé du côté d'un observateur et dans lequel est injectée la lumière produite par une source de lumière, et un film réflecteur agencé sous la cellule d'affichage à cristal liquide dichroïque, un film polariseur étant agencé au-dessus du guide de lumière.

Selon un second mode de réalisation, la présente invention concerne un dispositif d'affichage d'informations comprenant une cellule d'affichage à cristal liquide dichroïque de type transmissif disposée du côté d'un observateur, un guide de lumière dans lequel est injectée la lumière produite par une source de lumière et un film polariseur réfléchissant étant successivement disposés sous le guide de lumière.

Grâce à ces caractéristiques, la présente invention procure un dispositif d'affichage d'informations de type dichroïque dans lequel les fonctions de polarisation et de réflexion de la lumière naturelle sont réunies dans un même film, de sorte que l'on fait l'économie d'un film polariseur, ce qui permet de réduire encore davantage l'épaisseur et le prix de revient d'un tel dispositif d'affichage d'informations.

Selon une variante de réalisation, la présente invention concerne un dispositif d'affichage d'informations comprenant une cellule d'affichage à cristal liquide dichroïque de type réflectif disposée entre un guide de lumière dans lequel est injectée la lumière produite par une source de lumière et un film polariseur réfléchissant.

D'autres caractéristiques et avantages de la présente invention ressortiront plus clairement de la description détaillée qui suit d'un exemple de réalisation d'un dispositif d'affichage d'informations selon l'invention comprenant une cellule d'affichage à cristal liquide dichroïque, cet exemple étant donné à titre purement illustratif et non limitatif seulement en liaison avec le dessin annexé sur lequel :
- la figure 1 A, déjà citée, est une vue en coupe d'un premier mode de réalisation d'un dispositif d'affichage d'informations de l'art antérieur dans lequel la cellule d'affichage à cristal liquide dichroïque est disposée entre un film polariseur et une couche transflective, la cellule d'affichage dichroïque se trouvant en condition diurne, sans champ électrique appliqué ;
- la figure 1B, déjà citée, est une vue analogue à celle de la figure 1 A, la cellule d'affichage dichroïque se trouvant en condition diurne et à l'état commuté, c'est-à-dire qu'un champ électrique est appliqué ;
- la figure 1C, déjà citée, est une vue analogue à celle de la figure 1 A, la cellule d'affichage dichroïque se trouvant en condition nocturne et à l'état commuté, c'est-à-dire qu'un champ électrique est appliqué ;
- la figure 2A, déjà citée, est une vue en coupe d'un second mode de réalisation d'un dispositif d'affichage d'informations de l'art antérieur, dans lequel les fonctions transflective et de polarisation de la lumière naturelle sont réunies dans un même film, la cellule d'affichage dichroïque se trouvant en condition diurne, sans champ électrique appliqué ;
- la figure 2B, déjà citée, est une vue analogue à celle de la figure 2A, la cellule d'affichage dichroïque se trouvant en condition diurne et à l'état commuté, c'est-à-dire qu'un champ électrique est appliqué ;
- la figure 2C, déjà citée, est une vue analogue à celle de la figure 2A, la cellule d'affichage dichroïque se trouvant en condition nocturne et à l'état commuté, c'est-à-dire qu'un champ électrique est appliqué ;
- la figure 3A est une vue en coupe d'un premier mode de réalisation d'un dispositif d'affichage d'informations selon l'invention, dans lequel une cellule d'affichage à cristal liquide dichroïque de type transmissif est disposée entre un film polariseur et un guide de lumière muni sur sa face arrière d'un film réflecteur, la cellule d'affichage dichroïque se trouvant en condition diurne à l'état commuté, c'est-à-dire qu'un champ électrique est appliqué ;
- la figure 3B est une vue analogue à celle de la figure 3A, la cellule d'affichage dichroïque se trouvant en condition nocturne et à l'état commuté, c'est-à-dire qu'un champ électrique est appliqué ;
- la figure 3C est une vue en coupe d'une variante d'exécution du premier mode de réalisation du dispositif d'affichage d'informations illustré à la figure 3A, dans lequel une cellule d'affichage à cristal liquide dichroïque de type réflectif est disposée entre un guide de lumière et un film réflecteur, un film polariseur étant agencé au-dessus du guide de lumière, la cellule d'affichage dichroïque se trouvant en condition nocturne et à l'état commuté, c'est-à-dire qu'un champ électrique est appliqué ;
- la figure 4A est une vue en coupe d'un second mode de réalisation d'un dispositif d'affichage d'informations selon l'invention, dans lequel une cellule d'affichage à cristal liquide dichroïque de type transmissif est disposée du côté d'un observateur, un guide de lumière dans lequel est injectée la lumière produite par une source de lumière et un film polariseur réfléchissant étant successivement disposés sous le guide de lumière, la cellule d'affichage dichroïque se trouvant en condition diurne à l'état commuté, c'est-à-dire qu'un champ électrique est appliqué ;
- la figure 4B est une vue analogue à celle de la figure 4A, la cellule d'affichage dichroïque se trouvant en condition nocturne et à l'état commuté, c'est-à-dire qu'un champ électrique est appliqué, et
- la figure 4C est une vue en coupe d'une variante d'exécution du second mode de réalisation du dispositif d'affichage d'informations illustré à la figure 4A, dans lequel une cellule d'affichage à cristal liquide dichroïque de type réflectif est disposée entre un guide de lumière et un film polariseur réfléchissant, la cellule d'affichage dichroïque se trouvant en condition nocturne et à l'état commuté, c'est-à-dire qu'un champ électrique est appliqué.

La présente invention procède de l'idée générale inventive qui consiste à faire l'économie, dans un dispositif d'affichage d'informations comprenant une cellule d'affichage à cristal liquide de type dichroïque, de la couche transflective. On s'est en effet aperçu qu'en mode jour tout comme en mode nuit, on peut se servir du seul film réflecteur disposé à l'arrière du guide de lumière pour capter la lumière ambiante ou bien renvoyer la lumière qui sort du guide de lumière. Par conséquent, il est possible de réduire l'épaisseur d'un tel dispositif d'affichage d'informations, de même que son prix de revient. Selon un second mode de réalisation de l'invention, il est même proposé de regrouper dans un seul et unique film les fonctions de polarisation et de réflexion de la lumière, ce qui permet de réduire encore davantage l'épaisseur du dispositif d'affichage d'informations selon l'invention.

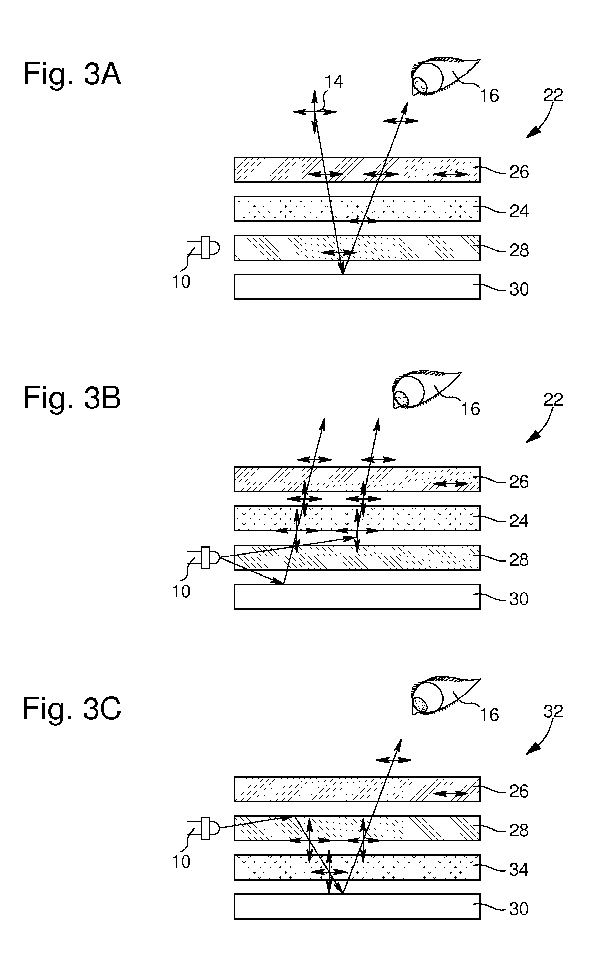

La figure 3A est une vue en coupe d'un premier mode de réalisation d'un dispositif d'affichage d'informations selon l'invention. Désigné dans son ensemble par la référence numérique générale 22, ce dispositif d'affichage d'informations comprend une cellule d'affichage à cristal liquide dichroïque 24 de type transmissif disposée entre un film polariseur 26 qui polarise la lumière horizontalement et un guide de lumière 28 muni sur sa face arrière d'un film réflecteur 30.

Dans l'exemple représenté à la figure 3A, la cellule d'affichage dichroïque 24 se trouve en condition diurne et à l'état commuté, c'est-à-dire qu'un champ électrique est appliqué, de sorte que la cellule d'affichage dichroïque 24 transmet la lumière sans modification. Comme on le voit à l'examen de cette figure, la composante verticale de la lumière naturelle 14, non polarisée, est absorbée par le film polariseur 26, tandis que la composante horizontale est transmise par le film polariseur 26. Par la suite, la lumière polarisée horizontalement traverse la cellule d'affichage dichroïque 24 et le guide de lumière 28 sans modification, avant d'être réfléchie par le film réflecteur 30. Au retour, la lumière, polarisée horizontalement, traverse successivement et sans modification le guide de lumière 28, la cellule d'affichage dichroïque 24 et le film polariseur 26 et est perçue par l'observateur 16. Dans l'état commuté de la cellule d'affichage dichroïque 24, il est donc possible d'afficher des informations perceptibles de jour.

La figure 3B est une vue analogue à celle de la figure 3A, la cellule d'affichage dichroïque 24 se trouvant en condition nocturne et à l'état commuté, c'est-à-dire qu'un champ électrique est appliqué, de sorte que la cellule d'affichage dichroïque 24 transmet la lumière sans modification. Comme on le voit à l'examen de cette figure, la lumière extraite du guide de lumière 28 est non polarisée. La lumière traverse ensuite la cellule d'affichage dichroïque 24 sans modification, puis sa composante verticale est absorbée par le film polariseur 26, tandis que sa composante horizontale est transmise par le film polariseur 26 et peut être perçue par l'observateur 16. De même, la lumière qui s'extrait du guide de lumière 28 par le bas est réfléchie vers le haut par le film réflecteur 30, puis traverse la cellule d'affichage dichroïque 24 sans modification. Par la suite, la lumière est polarisée horizontalement par le film polariseur 26 et est perceptible par l'observateur 16. Dans l'état commuté de la cellule d'affichage dichroïque 24 de type transmissif, il est donc possible d'afficher des informations perceptibles de nuit lorsque de la lumière produite par la source de lumière 10 est injectée dans le guide de lumière 28.

Dans ce qui suit, les éléments identiques à ceux décrits en liaison avec les figures 3A et 3B seront désignés par les mêmes références numériques.

Une variante d'exécution du premier mode de réalisation du dispositif d'affichage d'informations selon l'invention est illustrée à la figure 3C. Désigné dans son ensemble par la référence numérique générale 32, ce dispositif d'affichage d'informations comprend une cellule d'affichage à cristal liquide dichroïque 34 de type réflectif disposée entre le guide de lumière 28 et le film réflecteur 30, le film polariseur 26 étant agencé au-dessus du guide de lumière 28.

Comme on le voit à l'examen de la figure 3C, la cellule d'affichage dichroïque 34 se trouve en condition nocturne et à l'état commuté, c'est-à-dire qu'un champ électrique est appliqué, de sorte que la cellule d'affichage dichroïque 34 laisse passer la lumière sans modification. Plus précisément, le guide de lumière 28 extrait la lumière non polarisée de manière directionnelle vers le bas. Cette lumière non polarisée traverse sans modification la cellule d'affichage dichroïque 34, puis est réfléchie par le film réflecteur 30. Au retour, la lumière, non polarisée, traverse à nouveau la cellule d'affichage dichroïque 34 sans modification, puis le film polariseur 26 absorbe la composante verticale de la lumière et transmet la composante horizontale qui est perçue par l'observateur 16. Dans l'état commuté de la cellule d'affichage dichroïque 34 de type réflectif, il est donc possible d'afficher des informations perceptibles de nuit lorsque de la lumière produite par la source de lumière 10 est injectée dans le guide de lumière 28.

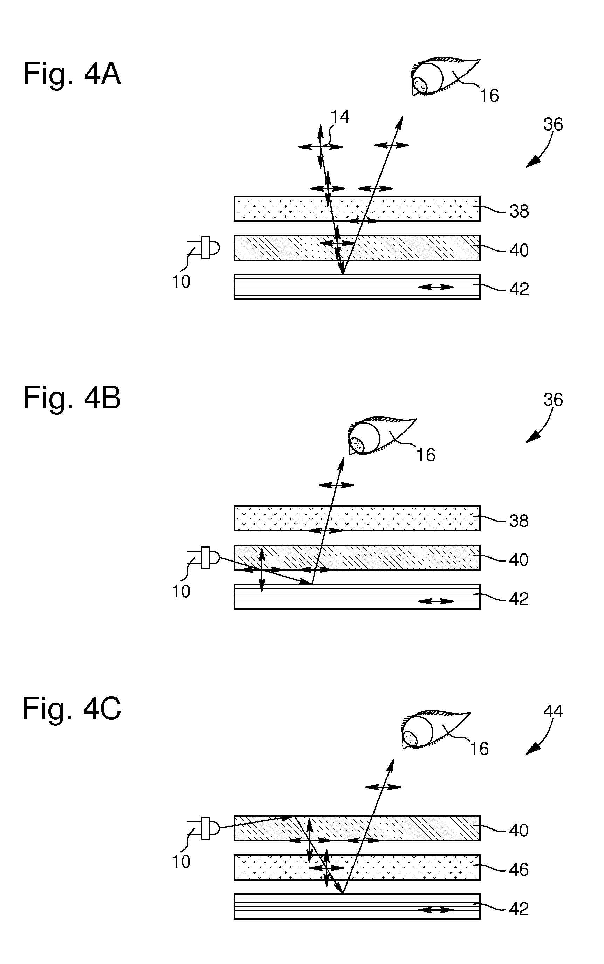

La figure 4A est une vue en coupe d'un second mode de réalisation d'un dispositif d'affichage d'informations selon l'invention. Désigné dans son ensemble par la référence numérique générale 36, ce dispositif d'affichage d'informations comprend une cellule d'affichage à cristal liquide dichroïque 38 de type transmissif disposée du côté d'un observateur 16. Un guide de lumière 40 dans lequel est injectée la lumière produite par une source de lumière 10 et un film polariseur réfléchissant 42 sont successivement disposés sous la cellule d'affichage dichroïque 38. La cellule d'affichage dichroïque 38 se trouve en condition diurne à l'état commuté, c'est-à-dire qu'un champ électrique est appliqué, de sorte que la cellule d'affichage dichroïque 38 laisse passer la lumière sans modification.

Comme on le voit à l'examen de la figure 4A, la lumière naturelle 14, non polarisée, traverse la cellule d'affichage à cristal liquide dichroïque 38 et le guide de lumière 40 sans modification. La composante horizontale de la lumière est ensuite absorbée par le film polariseur réfléchissant 42, tandis que la composante horizontale est réfléchie par le film polariseur réfléchissant 42. Au retour, la lumière, polarisée horizontalement, traverse successivement et sans modification le guide de lumière 40 et la cellule d'affichage dichroïque 38 et est perçue par l'observateur 16. Dans l'état commuté de la cellule d'affichage dichroïque 38, il est donc possible d'afficher des informations perceptibles de jour.

La figure 4B est une vue analogue à celle de la figure 4A, la cellule d'affichage dichroïque 38 se trouvant en condition nocturne et à l'état commuté, c'est-à-dire qu'un champ électrique est appliqué, de sorte que la cellule d'affichage dichroïque 38 laisse passer la lumière sans modification. Comme on le voit à l'examen de cette figure, le guide de lumière 40 extrait la lumière non polarisée de manière directionnelle vers le bas. La composante verticale de la lumière qui s'extrait du guide de lumière 40 vers le bas est absorbée par le film polariseur réfléchissant 42, tandis que la composante horizontale de la lumière est réfléchie par le film polariseur réfléchissant 42 vers le haut. La lumière, polarisée horizontalement, traverse ensuite le guide de lumière 40 et la cellule d'affichage dichroïque 38 sans autre modification et peut être perçue par l'observateur 16. Dans l'état commuté de la cellule d'affichage dichroïque 38 de type transmissif, il est donc possible d'afficher des informations perceptibles de nuit lorsque de la lumière produite par la source de lumière 10 est injectée dans le guide de lumière 40.

Dans ce qui suit, les éléments identiques à ceux décrits en liaison avec les figures 4A et 4B seront désignés par les mêmes références numériques.

Une variante d'exécution du second mode de réalisation du dispositif d'affichage d'informations selon l'invention est illustrée à la figure 4C. Désigné dans son ensemble par la référence numérique générale 44, ce dispositif d'affichage d'informations comprend une cellule d'affichage à cristal liquide dichroïque 46 de type réflectif disposée entre le guide de lumière 40 et le film polariseur réfléchissant 42.

Comme on le voit à l'examen de la figure 4C, la cellule d'affichage dichroïque 46 se trouve en condition nocturne et à l'état commuté, c'est-à-dire qu'un champ électrique est appliqué, de sorte que la lumière est transmise sans modification. Plus précisément, le guide de lumière 40 extrait la lumière non polarisée de manière directionnelle vers le bas. Cette lumière non polarisée est polarisée horizontalement par le film polariseur réfléchissant 42, et est réfléchie par celui-ci vers le haut. Au retour, la lumière, polarisée horizontalement, traverse successivement et sans modification la cellule d'affichage dichroïque 46 et le guide de lumière 40 et est perçue par l'observateur 16. Dans l'état commuté de la cellule d'affichage dichroïque 46 de type réflectif, il est donc possible d'afficher des informations perceptibles de nuit lorsque de la lumière produite par la source de lumière 10 est injectée dans le guide de lumière 40.

Il va de soi que la présente invention n'est pas limitée aux modes de réalisation qui viennent d'être décrits et que diverses modifications et variantes simples peuvent être envisagées par l'homme du métier sans sortir du cadre de l'invention tel que défini par les revendications annexées. En particulier, la présente invention peut s'appliquer de manière identique aux cellules d'affichage à cristal liquide dichroïque de type nématique ou super-nématique en hélice, encore connues sous leur acronyme TN ou STN. La présente invention s'applique également aux cellules d'affichage à cristal liquide dichroïque de type « vertically aligned » et cholestérique. On notera cependant que, dans le cas des cellules d'affichage à cristal liquide dichroïque de type « vertically aligned », les molécules de cristal liquide sont alignées verticalement dans l'état non commuté de la cellule d'affichage, de sorte qu'elles sont sans effet sur la lumière, tandis que dans l'état commuté, les molécules de cristal liquide sont alignées horizontalement et absorbent donc l'une des composantes de la lumière. Par ailleurs, dans le cas des cellules d'affichage à cristal liquide dichroïque de type cholestérique, les axes des hélices des molécules de cristal liquide sont orientés de manière aléatoire dans l'état non commuté de la cellule d'affichage, de sorte que les molécules de cristal liquide sont sans effet sur la lumière, tandis que dans l'état commuté, les axes des hélices des molécules de cristal liquide sont alignés verticalement, de sorte que les molécules de cristal liquide absorbent tous les états de polarisation de la lumière.

## Revendications

1. Dispositif d'affichage d'informations (22) comprenant une cellule d'affichage à cristal liquide dichroïque (24) de type transmissif disposée entre un film polariseur (26) placé du côté d'un observateur et un guide de lumière (28) dans lequel est injectée la lumière produite par une source de lumière (10), un film réflecteur (30) étant agencé sous le guide de lumière (28).

2. Dispositif d'affichage d'informations (32) comprenant une cellule d'affichage à cristal liquide dichroïque (34) de type réflectif disposée entre un guide de lumière (28) placé du côté d'un observateur et dans lequel est injectée la lumière produite par une source de lumière (10), et un film réflecteur (30) agencé sous la cellule d'affichage à cristal liquide dichroïque (34), un film polariseur (26) étant agencé au-dessus du guide de lumière (28).

3. Dispositif d'affichage d'informations (36) comprenant une cellule d'affichage à cristal liquide dichroïque (38) de type transmissif disposée du côté d'un observateur, un guide de lumière (40) dans lequel est injectée la lumière produite par une source de lumière (10) et un film polariseur réfléchissant (42) étant successivement disposés sous le guide de lumière (40).

4. Dispositif d'affichage d'informations (44) comprenant une cellule d'affichage à cristal liquide dichroïque (46) de type réflectif disposée entre un guide de lumière (40) dans lequel est injectée la lumière produite par une source de lumière (10) et un film polariseur réfléchissant (42).
